(19) Europäisches Patentamt
European Patent Office
Office européen des brevets

(11) EP 3 975 303 A1

(12) **EUROPEAN PATENT APPLICATION**
published in accordance with Art. 153(4) EPC

(43) Date of publication:
**30.03.2022 Bulletin 2022/13**

(21) Application number: **20810579.1**

(22) Date of filing: **28.04.2020**

(51) International Patent Classification (IPC):
***H01M 10/054*** (2010.01) ***H01M 10/0567*** (2010.01)
***H01M 10/0568*** (2010.01) ***H01M 10/0569*** (2010.01)

(52) Cooperative Patent Classification (CPC):
**H01M 10/054; H01M 10/0568; H01M 10/0569;**
H01M 2300/0025; Y02E 60/10

(86) International application number:
**PCT/JP2020/018056**

(87) International publication number:
**WO 2020/235314 (26.11.2020 Gazette 2020/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.05.2019 JP 2019096316**
**17.04.2020 JP 2020073842**

(71) Applicant: **Panasonic Intellectual Property Management Co., Ltd.**
**Osaka-shi, Osaka 540-6207 (JP)**

(72) Inventors:
- **HAMAMURA, Tomofumi**
  **Osaka-shi, Osaka 540-6207 (JP)**
- **HIBINO, Mitsuhiro**
  **Osaka-shi, Osaka 540-6207 (JP)**
- **NAKURA, Kensuke**
  **Osaka-shi, Osaka 540-6207 (JP)**

(74) Representative: **Grünecker Patent- und Rechtsanwälte**
**PartG mbB**
**Leopoldstraße 4**
**80802 München (DE)**

# (54) NONAQUEOUS ELECTROLYTE SOLUTION FOR MAGNESIUM SECONDARY BATTERY, AND MAGNESIUM SECONDARY BATTERY USING SAME

(57) The present disclosure provides a novel nonaqueous electrolyte solution for a magnesium secondary battery and a magnesium secondary battery using the electrolyte solution. The nonaqueous electrolyte solution for a magnesium secondary battery of the present disclosure contains a nonaqueous solvent; a magnesium salt; and an organoboron ate complex salt represented by formula (1) below:

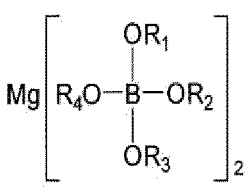

··· (1)

where $R_1$, $R_2$, $R_3$, and $R_4$ each independently contain a fluoroalkyl group. The nonaqueous solvent may include an ether solvent.

FIG. 1

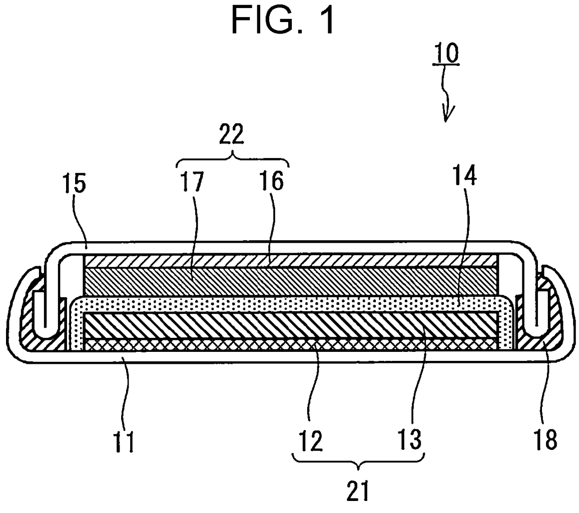


EP 3 975 303 A1

## Description

Technical Field

The present disclosure relates to a nonaqueous electrolyte solution for a magnesium secondary battery and a magnesium secondary battery using the electrolyte solution.

Background Art

In recent years, the development of a magnesium secondary battery has been awaited.

Patent Literature (PTL) 1 describes an electrolytic solution containing a magnesium salt of boronic acid or a magnesium salt of boric acid as well as a Lewis acid or a magnesium sulfonylimide having a specific structure.

Non Patent Literature (NPL) 1 describes a fluorinated alkoxyborate as an electrolyte used for a magnesium secondary battery.

Citation List

Patent Literature

PTL 1: International Publication No. 2017/170976

Non Patent Literature

NPL 1: J. Mater. Chem. A, 2017, 5, 10815-10820

Summary of Invention

Technical Problem

The present disclosure provides a novel nonaqueous electrolyte solution for a magnesium secondary battery and a magnesium secondary battery using the electrolyte solution.

Solution to Problem

The present disclosure provides a nonaqueous electrolyte solution for a magnesium secondary battery, containing: a nonaqueous solvent; a magnesium salt; and an organoboron ate complex salt represented by formula (1) below.

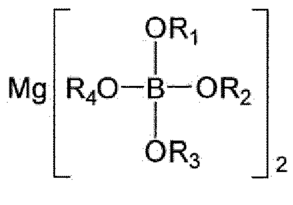

··· (1)

In formula (1), $R_1$, $R_2$, $R_3$, and $R_4$ each independently contain a fluoroalkyl group.

Advantageous Effects of Invention

According to the present disclosure, it is possible to provide a novel nonaqueous electrolyte solution for a magnesium secondary battery and a magnesium secondary battery using the electrolyte solution.

Brief Description of Drawings

[Fig. 1] Fig. 1 is a cross-sectional view schematically illustrating an exemplary configuration of a magnesium secondary battery.

[Fig. 2] Fig. 2 is a graph of cyclic voltammograms for Samples 1 and 2.

[Fig. 3] Fig. 3 is a graph of cyclic voltammograms for Samples 3 and 4.

[Fig. 4] Fig. 4 is a graph on which coulombic efficiency is plotted against magnesium salt concentrations in nonaqueous electrolyte solutions.

Description of Embodiments

(Findings Underlying the Present Disclosure)

Since two-electron reactions of magnesium are available, expectations are high for a magnesium secondary battery as a high-capacity secondary battery. However, due to strong interaction between divalent magnesium ions and the surrounding solvent, the solvent does not readily dissociate from magnesium ions. In other words, the deposition and dissolution of magnesium metal do not readily occur in a nonaqueous electrolyte solution for a magnesium secondary battery. This is a problem unique to a nonaqueous electrolyte solution for a magnesium secondary battery. In existing magnesium secondary batteries, for example, a nonaqueous electrolyte solution obtained by dissolving a magnesium salt in 1,2-dimethoxyethane or other glymes is used. However, the coulombic efficiency of a magnesium secondary battery using such a nonaqueous electrolyte solution is low. Due to problems like this, severe restrictions are imposed on the combinations of a nonaqueous solvent and a magnesium salt in a magnesium secondary battery.

In view of the findings described above, the present inventors found the following novel nonaqueous electrolyte solution.

(Summary of One Embodiment according to the Present Disclosure)

A nonaqueous electrolyte solution for a magnesium secondary battery according to a first aspect of the present disclosure, contains: a nonaqueous solvent; a magnesium salt; and an organoboron ate complex salt

represented by formula (1) below.

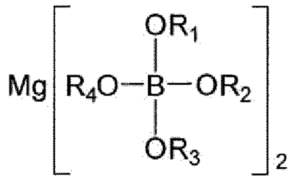

··· (1)

In formula (1), $R_1$, $R_2$, $R_3$, and $R_4$ each independently contain a fluoroalkyl group.

According to the first aspect, the organoboron ate complex salt can uniformly distribute magnesium ions on the surface of an electrode. Consequently, the deposition and dissolution of metallic magnesium that originates in the magnesium salt are promoted.

In a second aspect of the present disclosure, for example, in the nonaqueous electrolyte solution for a magnesium secondary battery according to the first aspect, the nonaqueous solvent may include an ether solvent. The magnesium salt can be satisfactorily dissolved in an ether solvent.

In a third aspect of the present disclosure, for example, in the nonaqueous electrolyte solution for a magnesium secondary battery according to the second aspect, the ether solvent may coordinate to the organoboron ate complex salt. According to the constitution like this, the dissociation of magnesium ions is promoted when an organoboron ate complex salt is dissolved in a nonaqueous solvent.

In a fourth aspect of the present disclosure, for example, in the nonaqueous electrolyte solution for a magnesium secondary battery according to the second or the third aspect, the ether solvent may include a glyme.

In a fifth aspect of the present disclosure, for example, in the nonaqueous electrolyte solution for a magnesium secondary battery according to the fourth aspect, the glyme may include at least one selected from the group consisting of 1,2-dimethoxyethane, diglyme, triglyme, and tetraglyme.

According to the fourth and the fifth aspects, it is possible to improve the dissolution properties of a magnesium salt in a nonaqueous electrolyte solution for a magnesium secondary battery.

In a sixth aspect of the present disclosure, for example, in the nonaqueous electrolyte solution for a magnesium secondary battery according to any one of the first to the fifth aspects, $R_1$, $R_2$, $R_3$, and $R_4$ in formula (1) may be each independently represented by $-C_xH_yF_z$ and may satisfy $1 \leq x \leq 4$, $0 \leq y < 9$, and $1 \leq z \leq 9$. According to the constitution like this, it is possible to improve the electrochemical stability of an organoboron ate complex salt.

In a seventh aspect of the present disclosure, for example, in the nonaqueous electrolyte solution for a magnesium secondary battery according to any one of the first to the sixth aspects, the magnesium salt may contain, as an anion, at least one selected from the group consisting of $[N(FSO_2)_2]^-$, $[N(CF_3SO_2)_2]^-$, $[N(C_2F_5SO_2)_2]^-$, and $[N(FSO_2)(CF_3SO_2)]^-$. These anions can form a salt with magnesium.

In an eighth aspect of the present disclosure, for example, in the nonaqueous electrolyte solution for a magnesium secondary battery according to any one of the first to the seventh aspects, a ratio of a molar concentration of the organoboron ate complex salt may be 0.74 or less relative to a sum of a molar concentration of the magnesium salt and the molar concentration of the organoboron ate complex salt. According to the constitution like this, it is possible to further promote the deposition and dissolution of metallic magnesium that originates in the magnesium salt.

A magnesium secondary battery according to a nineth aspect of the present disclosure includes a positive electrode; a negative electrode; and the nonaqueous electrolyte solution for a magnesium secondary battery of any one of the first to the eighth aspects.

According to the nineth aspect, for example, by using the nonaqueous electrolyte solution for a magnesium secondary battery of any one of the first to the eighth aspects, the electrochemical stability of the nonaqueous electrolyte solution can be enhanced. Consequently, it is possible to increase the charge-discharge efficiency of the magnesium secondary battery.

Hereinafter, a nonaqueous electrolyte solution for a magnesium secondary battery according to an embodiment and a magnesium secondary battery using the electrolyte solution will be described in detail by means of the drawings.

All the descriptions hereinafter are about general or concrete examples. Accordingly, the numerical values, composition, shapes, thickness, electrical characteristics, the configuration of a secondary battery, and so forth described hereinafter are exemplary and are not intended to limit the present disclosure. Moreover, components that are not recited in the independent claims, which present the broadest concept, are optional components.

[1. Nonaqueous Electrolyte Solution]

The nonaqueous electrolyte solution for a magnesium secondary battery according to an embodiment of the present disclosure, contains: a nonaqueous solvent; a magnesium salt; and an organoboron ate complex salt. The organoboron ate complex salt has the structure represented by formula (1) below. In formula (1) below, $R_1$, $R_2$, $R_3$, and $R_4$ each independently contain a fluoroalkyl group. The magnesium salt and the organoboron ate complex salt are dissolved in the nonaqueous solvent.

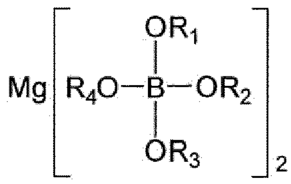

··· (1)

The organoboron ate complex salt can uniformly distribute magnesium ions near electrodes. Consequently, the nonaqueous electrolyte solution containing the organoboron ate complex salt can promote deposition and dissolution of metallic magnesium. Accordingly, depending on desirable requirements, the efficiency in deposition and dissolution of metallic magnesium can be improved. Such "desirable requirements" may be at least one of, for example, high magnesium ion conductivity, electrochemical stability, chemical stability, thermal stability, safety, low environmental load, and inexpensive price. For example, by dissolving the magnesium salt at a high concentration in the nonaqueous solvent, it is possible to increase the magnesium ion conductivity of the nonaqueous electrolyte solution. For example, by selecting a nonaqueous solvent that is highly resistant to oxidation, it is possible to obtain an electrochemically stable nonaqueous electrolyte solution. For example, by selecting a nonaqueous solvent that is low in toxicity, it is possible to obtain a highly safe nonaqueous electrolyte solution.

The term "organoboron ate complex salt" in the present disclosure means a salt of a magnesium ion with a complex ion of an organoboron ate complex. In the complex ion of the organoboron ate complex, four oxygen atoms bond with a boron atom, and a substituent bonds with each oxygen atom.

The organoboron ate complex salt has $R_1$, $R_2$, $R_3$, and $R_4$ as substituents. $R_1$, $R_2$, $R_3$, and $R_4$ may be a substituent having the same structure or may be substituents having different structures. Each $R_1$, $R_2$, $R_3$, or $R_4$ may contain a fluoroalkyl group. The fluoroalkyl group herein means an alkyl group whose at least one hydrogen has been replaced with fluorine. All the hydrogen of the alkyl group may be replaced with fluorine. As the number of fluorine increases, it is possible to further enhance the electrochemical stability of the organoboron ate complex salt by the inductive effect. Consequently, the withstand voltage of the nonaqueous electrolyte solution can be increased. The fluoroalkyl group may be linear or branched. In view of dissolution properties in a polar solvent, the carbon number of the fluoroalkyl group may be 1 to 4. The fluoroalkyl group is represented by $-C_xH_yF_z$, for example, where x satisfies $1 \leq x \leq 4$, y satisfies $0 \leq y < 9$, and z satisfies $1 \leq z \leq 9$. Exemplary fluoroalkyl groups include substituents in which at least one hydrogen of a methyl group, an ethyl group, an n-propyl group, an isopropyl group, an n-butyl group, an isobutyl group, a sec-butyl group, and a tert-butyl group has been replaced with fluorine.

The magnesium salt contains an anion. The anion is a monovalent anion, for example.

The magnesium salt contains, as an anion, at least one selected from the group consisting of $[N(FSO_2)_2]^-$, $[N(CF_3SO_2)_2]^-$, $[N(C_2F_5SO_2)_2]^-$, and $[N(FSO_2)(CF_3SO_2)]^-$. The anion may be derivatives of these anions. These anions can form a salt with magnesium. The magnesium salt may be a magnesium salt of an imide anion.

The nonaqueous solvent is not particularly limited provided that the magnesium salt can be dissolved. The nonaqueous solvent may include an ether solvent. The magnesium salt can be satisfactorily dissolved in an ether solvent. In view of dissolution properties, the nonaqueous solvent may include a glyme. A glyme can coordinate to a magnesium ion as a bidentate ligand. By using a glyme, it is possible to improve the dissolution properties of the magnesium salt in the nonaqueous solvent. Exemplary glymes include 1,2-dimethoxyethane (DME), diglyme, triglyme, and tetraglyme. In view of oxidation resistance, the nonaqueous solvent may include a fluorinated ether solvent. The fluorinated ether solvent herein means an ether solvent whose at least one hydrogen has been replaced with fluorine.

An ether solvent included in the nonaqueous solvent or another ether solvent may coordinate to the organoboron ate complex salt. Specifically, an ether solvent may coordinate to the magnesium ion of the organoboron ate complex salt. Due to coordination of an ether solvent to the organoboron ate complex salt, the dissociation of magnesium ions is promoted when the organoboron ate complex salt is dissolved in the nonaqueous solvent. The ether solvent to be coordinated to the organoboron ate complex salt may include a glyme. By using a glyme, it is possible to improve the dissolution properties of the organoboron ate complex salt in the nonaqueous solvent. When an organoboron ate complex salt is dissolved in a nonaqueous solvent, an ether solvent coordinated to the organoboron ate complex salt may be replaced with an ether solvent included in the nonaqueous solvent.

The concentration of the magnesium salt in the nonaqueous electrolyte solution is not particularly limited. By appropriately setting the concentration of the magnesium salt, it is possible to increase magnesium ion conductivity. The concentration of the magnesium salt in the nonaqueous electrolyte solution may be higher than the concentration of the organoboron ate complex salt in the nonaqueous electrolyte solution. When the concentration of the magnesium salt is higher than the concentration of the organoboron ate complex salt, it is possible to enhance the thermal stability of the nonaqueous electrolyte solution.

A ratio of a molar concentration of the organoboron ate complex salt is, for example, 0.74 or less relative to a sum of a molar concentration of the magnesium salt and the molar concentration of the organoboron ate complex salt. By appropriately adjusting the concentration of the organoboron ate complex salt in the nonaqueous

electrolyte solution, it is possible to further promote deposition and dissolution of metallic magnesium that originates in the magnesium salt. The ratio of the molar concentration of the organoboron ate complex salt may be 0.70 or less, 0.65 or less, or 0.60 or less relative to the sum of the molar concentration of the magnesium salt and the molar concentration of the organoboron ate complex salt. Meanwhile, the lower limit for the ratio of the molar concentration of the organoboron ate complex salt may be 0.20, 0.15, or 0.125 relative to the sum of the molar concentration of the magnesium salt and the molar concentration of the organoboron ate complex salt.

The nonaqueous electrolyte solution for a magnesium secondary battery according to the present embodiment contains a magnesium salt and an organoboron ate complex salt. Consequently, the dissolution current associated with dissolution of metallic magnesium that originates in the magnesium salt, but not in the organoboron ate complex salt, is observable. In addition, the dissolution of metallic magnesium that originates in the magnesium salt can be promoted by the organoboron ate complex salt. This is due to the following reasons. In some cases, decomposition products or the like of an anion contained in the magnesium salt settle on metallic magnesium that has been deposited through the reduction reaction of the magnesium salt. Such metallic magnesium, on which the decomposition products of the anion contained in the magnesium salt have settled, does not readily undergo dissolution through the oxidation reaction. Here, when the organoboron ate complex salt is added as in the present embodiment, the organoboron ate complex salt can be uniformly dispersed on an electrode. This suppresses settlement of the decomposition products of the anion contained in the magnesium salt. Consequently, the dissolution of metallic magnesium is promoted through the oxidation reaction.

[2. Magnesium Secondary Battery]

[2-1. Overall Configuration]

The nonaqueous electrolyte solution according to the present embodiment can be utilized for a magnesium secondary battery. Such a magnesium secondary battery includes a positive electrode; a negative electrode; and a magnesium ion-conductive nonaqueous electrolyte solution. For such a nonaqueous electrolyte solution, the nonaqueous electrolyte solution described in [1. Nonaqueous Electrolyte Solution] above can be used appropriately. By using the nonaqueous electrolyte solution of the present disclosure, it is possible to increase the charge-discharge efficiency of a magnesium secondary battery.

Fig. 1 is a cross-sectional view schematically illustrating an exemplary configuration of a magnesium secondary battery 10.

The magnesium secondary battery 10 includes a positive electrode 21, a negative electrode 22, a separator 14, a case 11, a seal 15, and a gasket 18. The separator 14 is disposed between the positive electrode 21 and the negative electrode 22. The positive electrode 21, the negative electrode 22, and the separator 14 are impregnated with a nonaqueous electrolyte solution and are placed within the case 11. The case 11 is closed with the gasket 18 and the seal 15.

The magnesium secondary battery 10 may have a cylindrical, prismatic, button, coin, or flat structure.

[2-2. Positive Electrode]

The positive electrode 21 includes a positive electrode current collector 12 and a positive electrode active material layer 13 disposed on the positive electrode current collector 12. The positive electrode active material layer 13 is disposed between the positive electrode current collector 12 and the separator 14.

The positive electrode active material layer 13 contains a positive electrode active material. The positive electrode active material may be fluorinated graphite, a metal oxide, or a metal halide. Such a metal oxide and a metal halide may contain magnesium and at least one selected from the group consisting of scandium, titanium, vanadium, chromium, manganese, iron, cobalt, nickel, copper, and zinc. The positive electrode active material may be a sulfide, such as $Mo_6S_8$, or a chalcogenide, such as $Mo_9Se_{11}$.

Exemplary positive electrode active materials include $MgM_2O_4$, $MgRO_2$, $MgXSiO_4$, and $Mg_xZ_yAO_zF_w$. Here, M includes at least one selected from the group consisting of Mn, Co, Cr, Ni, and Fe. R includes at least one selected from the group consisting of Mn, Co, Cr, Ni, and Al. X includes at least one selected from the group consisting of Mn, Co, Ni, and Fe. Z includes at least one selected from the group consisting of transition metals, Sn, Sb, and In; and A includes at least one selected from the group consisting of P, Si, and S, where x satisfies $0 < x \leq 2$, y satisfies $0.5 \leq y \leq 1.5$, z is 3 or 4, and w satisfies $0.5 \leq w \leq 1.5$.

The positive electrode active material layer 13 may further contain a conductive material and/or a binder as necessary.

Exemplary conductive materials include carbon materials, metals, inorganic compounds, and conducting polymers. Exemplary carbon materials include graphite, acetylene black, carbon black, Ketjen black, carbon whiskers, needle coke, and carbon fibers. Examples of graphite include natural graphite and artificial graphite. Examples of natural graphite include vein graphite and flake graphite. Exemplary metals include copper, nickel, aluminum, silver, and gold. Exemplary inorganic compounds include tungsten carbide, titanium carbide, tantalum carbide, molybdenum carbide, titanium boride, and titanium nitride. These materials may be used alone or in mixture.

Exemplary binders include fluorine-containing resins, thermoplastic resins, ethylene-propylene-diene

monomer (EPDM) rubber, sulfonated EPDM rubber, and natural butyl rubber (NBR). Exemplary fluorine-containing resins include polytetrafluoroethylene (PTFE), polyvinylidene fluoride (PVdF), and fluoro rubber. Exemplary thermoplastic resins include polypropylene and polyethylene. These materials may be used alone or in mixture.

Exemplary solvents for dispersing a positive electrode active material, a conductive material, and a binder include N-methylpyrrolidone, dimethylformamide, dimethylacetamide, methyl ethyl ketone, cyclohexanone, methyl acetate, methyl acrylate, diethylenetriamine, N,N-dimethylaminopropylamine, ethylene oxide, and tetrahydrofuran. A thickener may be added to a dispersant. Exemplary thickeners include carboxymethyl cellulose and methyl cellulose.

The positive electrode active material layer 13 is formed by the following method, for example. First, a positive electrode active material, a conductive material, and a binder are mixed to obtain a mixture of these materials. Then, an appropriate solvent is added to the resulting mixture to obtain a paste of a positive electrode mixture. Subsequently, the positive electrode mixture is applied to the surface of a positive electrode current collector 12 and dried, thereby forming a positive electrode active material layer 13 on the positive electrode current collector 12. Here, the positive electrode active material layer 13 may be pressed to increase the electrode density.

The thickness of the positive electrode active material layer 13 is not particularly limited and is 1 μm or more and 100 μm or less, for example.

The material for the positive electrode current collector 12 is an elemental metal or an alloy, for example. More specifically, the material for the positive electrode current collector 12 may be an elemental metal or an alloy that contains at least one selected from the group consisting of copper, chromium, nickel, titanium, platinum, gold, aluminum, tungsten, iron, and molybdenum. The material for the positive electrode current collector 12 may be stainless steel.

The positive electrode current collector 12 may be in the form of a plate or a foil. The positive electrode current collector 12 may be a laminated film.

When the case 11 also acts as a positive electrode current collector, the positive electrode current collector 12 may be omitted.

[2-3. Negative Electrode]

The negative electrode 22 includes, for example, a negative electrode current collector 16 and a negative electrode active material layer 17 containing a negative electrode active material. The negative electrode active material layer 17 is disposed between the negative electrode current collector 16 and the separator 14.

The negative electrode active material layer 17 contains a negative electrode active material that enables insertion and extraction of magnesium ions. Exemplary negative electrode active materials include carbon materials. Exemplary carbon materials include graphite, non-graphitic carbon, and graphite intercalation compounds. Examples of non-graphitic carbon include hard carbon and coke.

The negative electrode active material layer 17 may further contain a conductive material and/or a binder as necessary. For such a conductive material, binder, solvent, and thickener, the conductive materials, binders, solvents, and thickeners described in [2-2. Positive Electrode], for example, may be used appropriately.

The thickness of the negative electrode active material layer 17 is not particularly limited and is 1 μm or more and 50 μm or less, for example.

Alternatively, the negative electrode active material layer 17 contains a negative electrode active material that enables deposition and dissolution of magnesium. In this case, exemplary negative electrode active materials include Mg metal and Mg alloys. The Mg alloys are, for example, alloys of magnesium with at least one selected from the group consisting of aluminum, silicon, gallium, zinc, tin, manganese, bismuth, and antimony.

As the material for the negative electrode current collector 16, for example, the same materials for the positive electrode current collector 12 described in [2-2. Positive Electrode] may be used appropriately. The negative electrode current collector 16 may be in the form of a plate or a foil.

When the seal 15 also acts as a negative electrode current collector, the negative electrode current collector 16 may be omitted.

When the negative electrode current collector 16 is formed of a material that enables surface deposition and dissolution of magnesium, the negative electrode active material layer 17 may be omitted. In other words, the negative electrode 22 may be formed solely from the negative electrode current collector 16 that enables deposition and dissolution of magnesium. In this case, the negative electrode current collector 16 may be stainless steel, nickel, copper, or iron.

[2-4. Separator]

Exemplary materials for the separator 14 include microporous membranes, woven fabrics, and nonwoven fabrics. The materials for the separator 14 may be polyolefins, such as polypropylene and polyethylene. The thickness of the separator 14 is 10 μm or more and 300 μm or less, for example. The separator 14 may be a single-layer film formed of one material, a composite film formed from two or more materials, or a multilayer film. The porosity of the separator 14 is 30% or more and 70% or less, for example.

EXAMPLES

[3. Experimental Results]

[3-1. Preparation of Nonaqueous Electrolyte Solutions]

[Sample 1]

As a nonaqueous solvent, 1,2-dimethoxyethane (hereinafter, referred to as DME, purchased from Kishida Chemical Co., Ltd.) was used. In 1,2-dimethoxyethane, $Mg[N(CF_3SO_2)_2]_2$ (hereinafter, referred to as $Mg(TFSI)_2$, purchased from Kishida Chemical Co., Ltd.), which is a magnesium imide salt, was dissolved at a concentration of 0.35 mol/L. A nonaqueous electrolyte solution of Sample 1 was prepared by further dissolving, in the resulting solution, $Mg[B(OCH(CF_3)_2)_4]_2 \cdot 3DME$, which is a 1,2-dimethoxyethane-coordinated organoboron ate complex salt, at a concentration of 0.05 mol/L. Here, $Mg[B(OCH(CF_3)_2)_4]_2 \cdot 3DME$ was prepared by the method described in NPL 1.

[Sample 2]

As a nonaqueous solvent, 1,2-dimethoxyethane (purchased from Kishida Chemical Co., Ltd.) was used. A nonaqueous electrolyte solution of Sample 2 was prepared by dissolving $Mg(TFSI)_2$ (purchased from Kishida Chemical Co., Ltd.) at a concentration of 0.40 mol/L in 1,2-dimethoxyethane.

Both the concentrations of magnesium ions in Sample 1 and Sample 2 were 0.40 mol/L.

[Sample 3]

As a nonaqueous solvent, 1,2-dimethoxyethane (purchased from Kishida Chemical Co., Ltd.) was used. In 1,2-dimethoxyethane, $Mg(TFSI)_2$ (purchased from Kishida Chemical Co., Ltd.) was dissolved at a concentration of 0.85 mol/L. A nonaqueous electrolyte solution of Sample 3 was prepared by further dissolving, in the resulting solution, $Mg[B(OCH(CF_3)_2)_4]_2 \cdot 3DME$ at a concentration of 0.15 mol/L. Here, $Mg[B(OCH(CF_3)_2)_4]_2 \cdot 3DME$ was prepared by the method described in NPL 1.

[Sample 4]

As a nonaqueous solvent, 1,2-dimethoxyethane (purchased from Kishida Chemical Co., Ltd.) was used. A nonaqueous electrolyte solution of Sample 4 was prepared by dissolving $Mg(TFSI)_2$ (purchased from Kishida Chemical Co., Ltd.) at a concentration of 1.0 mol/L in 1,2-dimethoxyethane.

Both the concentrations of magnesium ions in Sample 3 and Sample 4 were 1.0 mol/L.

[Sample 5]

As a nonaqueous solvent, 1,2-dimethoxyethane (purchased from Kishida Chemical Co., Ltd.) was used. In 1,2-dimethoxyethane, $Mg(TFSI)_2$ (purchased from Kishida Chemical Co., Ltd.) was dissolved at a concentration of 0.20 mol/L. A nonaqueous electrolyte solution of Sample 5 was prepared by further dissolving, in the resulting solution, $Mg[B(OCH(CF_3)_2)_4]_2 \cdot 3DME$ at a concentration of 0.80 mol/L. Here, $Mg[B(OCH(CF_3)_2)_4]_2 \cdot 3DME$ was prepared by the method described in NPL 1.

[Sample 6]

As a nonaqueous solvent, 1,2-dimethoxyethane (purchased from Kishida Chemical Co., Ltd.) was used. In 1,2-dimethoxyethane, $Mg(TFSI)_2$ (purchased from Kishida Chemical Co., Ltd.) was dissolved at a concentration of 0.40 mol/L. A nonaqueous electrolyte solution of Sample 6 was prepared by further dissolving, in the resulting solution, $Mg[B(OCH(CF_3)_2)_4]_2 \cdot 3DME$ at a concentration of 0.60 mol/L. Here, $Mg[B(OCH(CF_3)_2)_4]_2 \cdot 3DME$ was prepared by the method described in NPL 1.

[Sample 7]

As a nonaqueous solvent, 1,2-dimethoxyethane (purchased from Kishida Chemical Co., Ltd.) was used. In 1,2-dimethoxyethane, $Mg(TFSI)_2$ (purchased from Kishida Chemical Co., Ltd.) was dissolved at a concentration of 0.60 mol/L. A nonaqueous electrolyte solution of Sample 7 was prepared by further dissolving, in the resulting solution, $Mg[B(OCH(CF_3)_2)_4]_2 \cdot 3DME$ at a concentration of 0.40 mol/L. Here, $Mg[B(OCH(CF_3)_2)_4]_2 \cdot 3DME$ was prepared by the method described in NPL 1.

[Sample 8]

As a nonaqueous solvent, 1,2-dimethoxyethane (purchased from Kishida Chemical Co., Ltd.) was used. In 1,2-dimethoxyethane, $Mg(TFSI)_2$ (purchased from Kishida Chemical Co., Ltd.) was dissolved at a concentration of 0.80 mol/L. A nonaqueous electrolyte solution of Sample 8 was prepared by further dissolving, in the resulting solution, $Mg[B(OCH(CF_3)_2)_4]_2 \cdot 3DME$ at a concentration of 0.20 mol/L. Here, $Mg[B(OCH(CF_3)_2)_4]_2 \cdot 3DME$ was prepared by the method described in NPL 1.

Here, Samples 1, 3, and 5 to 8 are Examples and Samples 2 and 4 are Comparative Examples.

[3-2. Evaluation of CV Characteristics]

The obtained nonaqueous electrolyte solutions were subjected to cyclic voltammetry (CV) using a beaker

cell as a measurement cell and a potentiostat/galvanostat (from BioLogic Sciences Instruments, VSP-300) as a measuring apparatus. A platinum disk electrode was used as a working electrode, and 5 mm × 40 mm magnesium ribbons were used as a reference electrode and a counter electrode. Cyclic voltammetry was performed at room temperature (25°C). The results are shown in Figs. 2 and 3.

From a cyclic voltammogram, the charge required for deposition of metallic magnesium and the charge required for dissolution of metallic magnesium were calculated. The columbic efficiency was calculated by dividing the charge required for dissolution of metallic magnesium by the charge required for deposition of metallic magnesium.

Fig. 2 is a graph of cyclic voltammograms for Sample 1 and Sample 2. The vertical axis represents the current flowing through the working electrode, and the horizontal axis represents the potential of the working electrode relative to the reference electrode. Fig. 2 shows the results of the tenth cycle when ten cycles of potential scan were repeated in a scan range from -1 V to 3 V. The potential scan rate was 25 mV/s. As shown in Fig. 2, the current presumably due to deposition and dissolution of metallic magnesium was observed for Sample 1. The coulombic efficiency of Sample 1 was 16%, whereas the coulombic efficiency of Sample 2 was 8%. Compared with the coulombic efficiency of Sample 2, the coulombic efficiency of Sample 1 is significantly improved. This is presumably because an organoboron ate complex salt contained in the nonaqueous electrolyte solution of Sample 1 promoted deposition and dissolution of metallic magnesium.

From these results, the nonaqueous electrolyte solution of Sample 1 is considered suitable for a magnesium secondary battery.

Fig. 3 is a graph of cyclic voltammograms for Sample 3 and Sample 4. The vertical axis represents the current flowing through the working electrode, and the horizontal axis represents the potential of the working electrode relative to the reference electrode. Fig. 3 shows the results of the tenth cycle when ten cycles of potential scan were repeated in a scan range from -1 V to 3 V. The potential scan rate was 25 mV/s.

The coulombic efficiency of Sample 3 was 46%, whereas the coulombic efficiency of Sample 4 was 8%. Compared with the coulombic efficiency of Sample 4, the coulombic efficiency of Sample 3 is significantly improved. This is presumably because an organoboron ate complex salt contained in the nonaqueous electrolyte solution of Sample 3 promoted deposition and dissolution of metallic magnesium.

When an organoboron ate complex salt is contained in a nonaqueous electrolyte solution as in the technique described in NPL 1, the current presumably associated with dissolution of metallic magnesium that originates in the organoboron ate complex salt is observable in the potential range from 0 V to 1 V. Meanwhile, according to the results of Sample 1 and Sample 3, although an organoboron ate complex salt is contained in a nonaqueous electrolyte solution, the current presumably associated with dissolution of metallic magnesium was hardly observed in the potential range from 0 V to 1 V. However, the current densities of Sample 1 and Sample 3 increase in the potential range from 1 V to 2 V compared with the current densities of Sample 2 and Sample 4, respectively. This is understood that the current presumably associated with dissolution of metallic magnesium that originates in the magnesium imide salt increases since an organoboron ate complex salt is contained in the nonaqueous electrolyte solutions of Sample 1 and Sample 3.

Fig. 4 is a graph on which coulombic efficiency is plotted against magnesium salt concentrations in the nonaqueous electrolyte solutions of Samples 4 to 8. Here, Fig. 4 plots the coulombic efficiency obtained from the results of the potential scan in the first cycle when Samples 4 to 8 were each subjected to CV in the same manner as Figs. 2 and 3. The coulombic efficiencies obtained from the result of the potential scan in the first cycle for Samples 4 to 8 were 12.5%, 11%, 17%, 27%, and 15%, respectively. Fig. 4 also shows an approximate straight line obtained from the plot of Samples 5 to 7 and a straight line that passes through Sample 4 and that is parallel to the x-axis. According to the plot of Samples 5 to 7, the coulombic efficiency increases as the concentration of the magnesium imide salt in a nonaqueous electrolyte solution increases. The coulombic efficiency of Sample 8 was lower than the coulombic efficiency of Sample 7. However, the coulombic efficiency of Sample 8 was higher than the coulombic efficiency of Sample 4.

When the concentration of the magnesium imide salt contained in a nonaqueous electrolyte solution is defined as x and the coulombic efficiency as y, the approximate straight line (1) obtained from the plot of Samples 5 to 7 is expressed as $y = 41.6x + 2.0$. Meanwhile, the straight line (2) that passes through Sample 4 and that is parallel to the x-axis is expressed as $y = 12.5$. Accordingly, the concentration of the magnesium imide salt at the intersection between the approximate straight line (1) and the straight line (2) was 0.252 mol/L. In other words, it was found in the present embodiment that the coulombic efficiency of a nonaqueous electrolyte solution is higher than the coulombic efficiency of Sample 4 when the concentration of the magnesium imide salt in the nonaqueous electrolyte solution is 0.26 mol/L or more. This reveals that the upper limit of the concentration of an organoboron ate complex salt in a nonaqueous electrolyte solution is 0.74 mol/L.

Meanwhile, from Fig. 4, the lower limit of the concentration of an organoboron ate complex salt contained in a nonaqueous electrolyte solution is not limited to a specific value. This is because, from Fig. 4, the coulombic efficiency is presumed to increase compared with Sample 4 by incorporating an organoboron ate complex salt even in a small amount into a nonaqueous electrolyte

solution.

From the results of Sample 1 and Sample 3, it is presumed that an organoboron ate complex salt further satisfactorily promotes deposition and dissolution of metallic magnesium by increasing the concentration of magnesium ions contained in a nonaqueous electrolyte solution.

Based on the foregoing results, the nonaqueous electrolyte solution of Sample 3 is considered suitable for a magnesium secondary battery.

Industrial Applicability

The nonaqueous electrolyte solution of the present disclosure can be utilized for magnesium secondary batteries.

Reference Signs List

- 10 Magnesium secondary battery
- 11 Case
- 12 Positive electrode current collector
- 13 Positive electrode active material layer
- 14 Separator
- 15 Seal
- 16 Negative electrode current collector
- 17 Negative electrode active material layer
- 18 Gasket
- 21 Positive electrode
- 22 Negative electrode

## Claims

**1.** A nonaqueous electrolyte solution for a magnesium secondary battery, comprising:

a nonaqueous solvent;
a magnesium salt; and
an organoboron ate complex salt represented by formula (1) below:

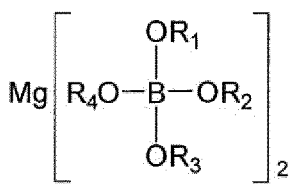

··· (1)

wherein $R_1$, $R_2$, $R_3$, and $R_4$ each independently contain a fluoroalkyl group.

**2.** The nonaqueous electrolyte solution for a magnesium secondary battery according to Claim 1, wherein the nonaqueous solvent includes an ether solvent.

**3.** The nonaqueous electrolyte solution for a magnesium secondary battery according to Claim 2, wherein the ether solvent coordinates to the organoboron ate complex salt.

**4.** The nonaqueous electrolyte solution for a magnesium secondary battery according to Claim 2 or 3, wherein
the ether solvent includes a glyme.

**5.** The nonaqueous electrolyte solution for a magnesium secondary battery according to Claim 4, wherein the glyme includes at least one selected from the group consisting of 1,2-dimethoxyethane, diglyme, triglyme, and tetraglyme.

**6.** The nonaqueous electrolyte solution for a magnesium secondary battery according to any one of Claims 1 to 5, wherein
$R_1$, $R_2$, $R_3$, and $R_4$ in formula (1) are each independently represented by - $C_xH_yF_z$ and satisfy

$$1 \leq x \leq 4,\ 0 \leq y < 9, \text{ and } 1 \leq z \leq 9.$$

**7.** The nonaqueous electrolyte solution for a magnesium secondary battery according to any one of Claims 1 to 6, wherein
the magnesium salt contains, as an anion, at least one selected from the group consisting of $[N(FSO_2)_2]^-$, $[N(CF_3SO_2)_2]^-$, $[N(C_2F_5SO_2)_2]^-$, and $[N(FSO_2)(CF_3SO_2)]^-$.

**8.** The nonaqueous electrolyte solution for a magnesium secondary battery according to any one of Claims 1 to 7, wherein
a ratio of a molar concentration of the organoboron ate complex salt is 0.74 or less relative to a sum of a molar concentration of the magnesium salt and the molar concentration of the organoboron ate complex salt.

**9.** A magnesium secondary battery comprising:

a positive electrode;
a negative electrode; and
the nonaqueous electrolyte solution for a magnesium secondary battery according to any one of Claims 1 to 8.

FIG. 1

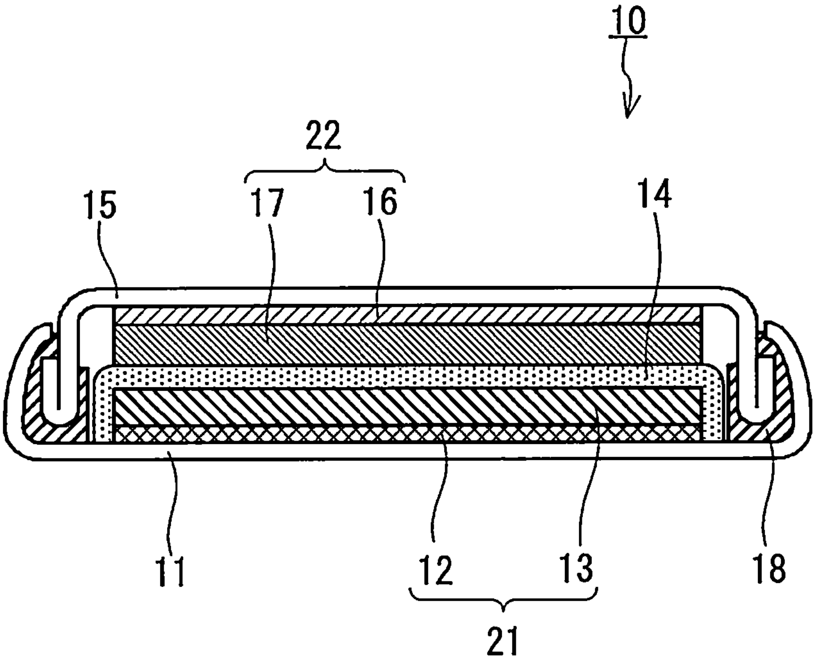
10
22
15
17
16
14
11
12
13
18
21

FIG. 2

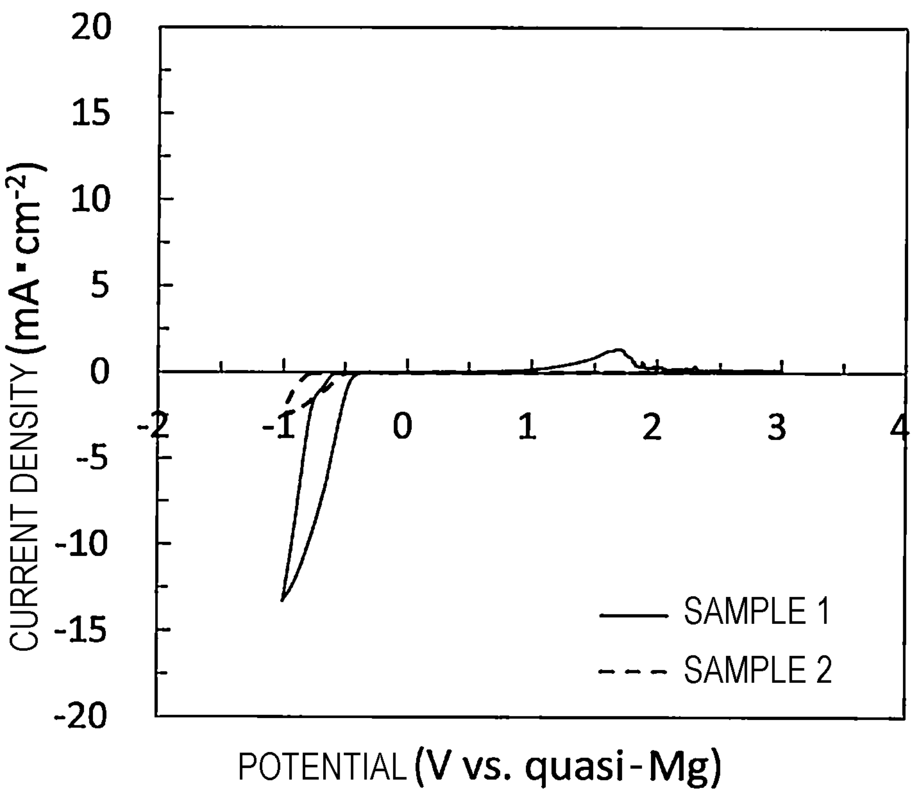
20
15
10
5
0
-5
-10
-15
-20
-2
-1
0
1
2
3
4
CURRENT DENSITY (mA・cm-2)
SAMPLE 1
SAMPLE 2
POTENTIAL (V vs. quasi-Mg)

FIG. 3

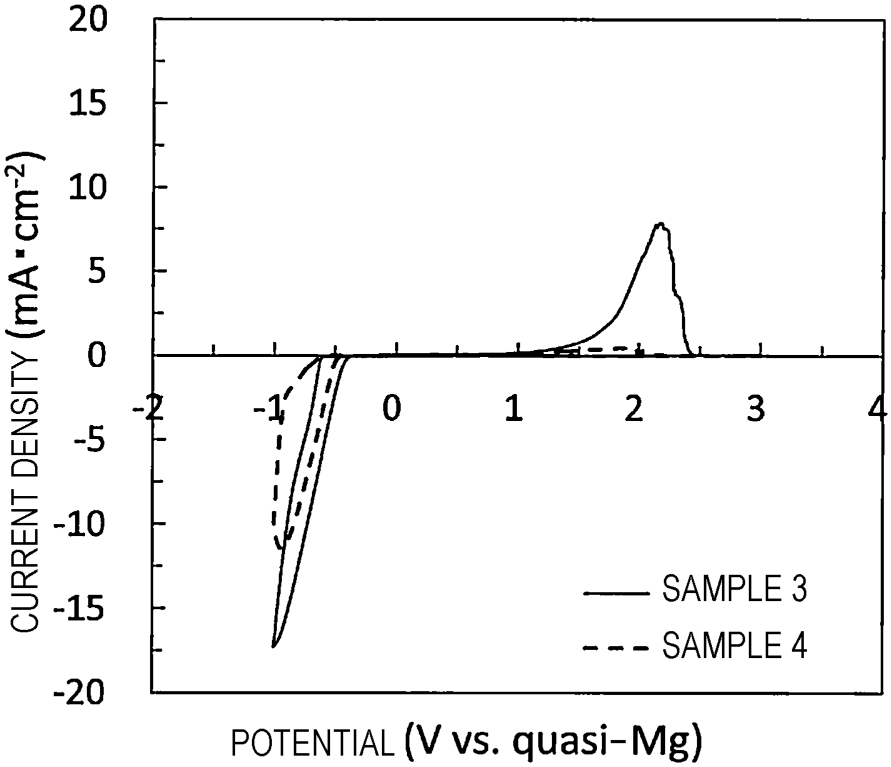
20
15
10
5
0
-5
-10
-15
-20
-2
-1
0
1
2
3
4
CURRENT DENSITY (mA·cm-2)
POTENTIAL (V vs. quasi-Mg)
SAMPLE 3
SAMPLE 4

FIG. 4

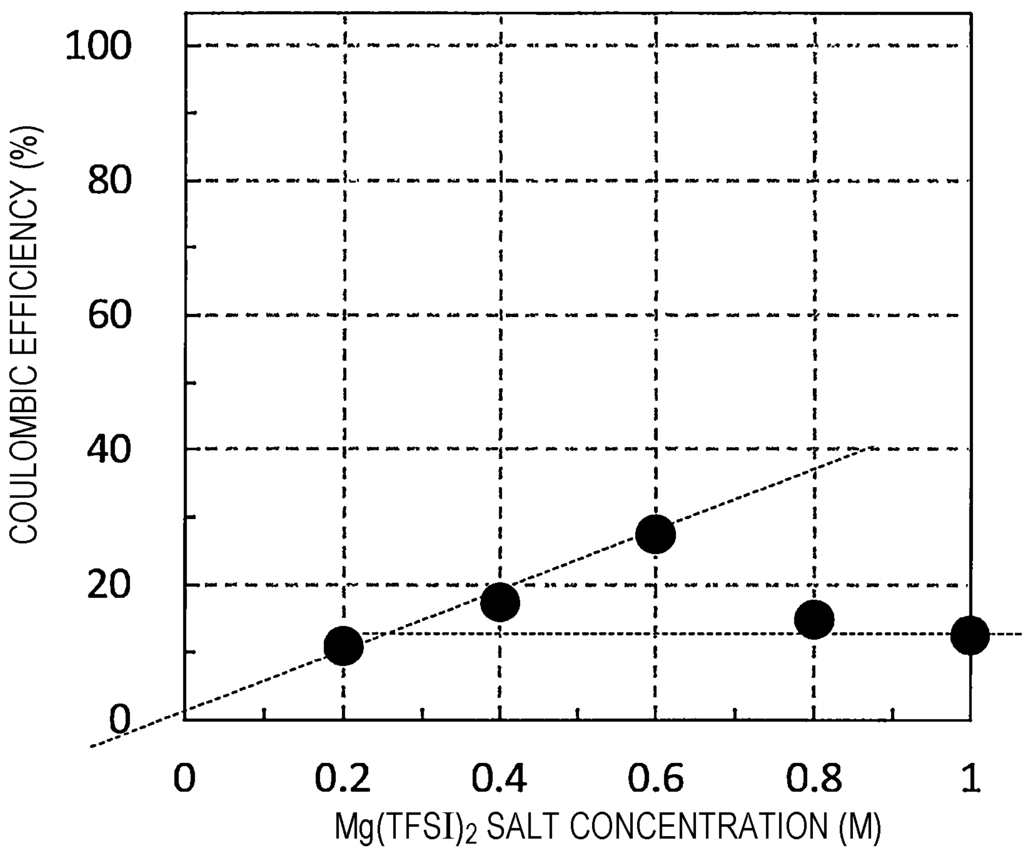
100
80
60
40
20
0
0
0.2
0.4
0.6
0.8
1
COULOMBIC EFFICIENCY (%)
Mg(TFSI)2 SALT CONCENTRATION (M)

## INTERNATIONAL SEARCH REPORT

International application No. PCT/JP2020/018056

A. CLASSIFICATION OF SUBJECT MATTER
H01M 10/054(2010.01)i; H01M 10/0567(2010.01)i; H01M 10/0568(2010.01)i; H01M 10/0569(2010.01)i
FI: H01M10/0567; H01M10/0568; H01M10/054; H01M10/0569
According to International Patent Classification (IPC) or to both national classification and IPC

B. FIELDS SEARCHED

Minimum documentation searched (classification system followed by classification symbols)
H01M10/05-10/0587

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
Science Direct

C. DOCUMENTS CONSIDERED TO BE RELEVANT

| Category* | Citation of document, with indication, where appropriate, of the relevant passages | Relevant to claim No. |
|---|---|---|
| A | JP 2001-143750 A (CENTRAL GLASS CO., LTD.) 25.05.2001 (2001-05-25) claim 1, paragraphs [0010]-[0012], [0044]-[0047] | 1-9 |
| A | JP 2017-22024 A (HONDA MOTOR CO., LTD.) 26.01.2017 (2017-01-26) claim 1, paragraphs [0034], [0037], table 1, examples 1-8 | 1-9 |
| A | JP 2005-505099 A (BAR-ILAN UNIVERSITY) 17.02.2005 (2005-02-17) claims 1-3, paragraphs [0025]-[0027] | 1-9 |
| A | JP 2014-521195 A (TOYOTA MOTOR CORP.) 25.08.2014 (2014-08-25) claim 1, paragraph [0009] | 1-9 |
| A | JP 2012-169138 A (TOSOH FINECHEM CORPORATION) 06.09.2012 (2012-09-06) paragraphs [0003], [0008]-[0011] | 1-9 |
| A | JP 2004-319133 A (MATSUSHITA ELECTRIC INDUSTRIAL CO., LTD.) 11.11.2004 (2004-11-11) claim 1, paragraphs [0006]-[0009], [0019] | 1-9 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 July 2020 (22.07.2020) | 04 August 2020 (04.08.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/018056

| Patent Documents referred in the Report | Publication Date | Patent Family | Publication Date |
|---|---|---|---|
| JP 2001-143750 A | 25 May 2001 | (Family: none) | |
| JP 2017-22024 A | 26 Jan. 2017 | US 2017/0018804 A1 paragraphs [0058], [0066], [0069], table 1, examples 1-8<br>CN 106356560 A | |
| JP 2005-505099 A | 17 Feb. 2005 | US 2001/0049060 A1 claims 1-3, paragraphs [0032]-[0034]<br>WO 2001/029919 A1<br>KR 10-2004-0006005 A<br>CN 1522474 A<br>KR 10-2002-0060200 A | |
| JP 2014-521195 A | 25 Aug. 2014 | US 2014/0147754 A1 claim 1, paragraph [0009]<br>CN 102916220 A | |
| JP 2012-169138 A | 06 Sep. 2012 | (Family: none) | |
| JP 2004-319133 A | 11 Nov. 2004 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017170976 A


### Non-patent literature cited in the description


- *J. Mater. Chem. A,* 2017, vol. 5, 10815-10820